# EUROPEAN PATENT SPECIFICATION

(11) **EP 2 437 593 B1**
(45) Date of publication and mention of the grant of the patent: **01.03.2017**
(21) Application number: 10720786.2
(22) Date of filing: 27.05.2010
(51) Int. Cl.: A01K 1/00, A01K 1/12

(54) **SAFETY SYSTEM**
SICHERHEITSSYSTEM
SYSTÈME DE SÉCURITÉ

(30) Priority: 05.06.2009 SE 0950414
(43) Date of publication of application: 11.04.2012
(73) Proprietor: DeLaval Holding AB, 147 21 Tumba (SE)
(72) Inventor: HOLMGREN, Hans, 112 69 Stockholm (SE)
(74) Representative: Lilliehorn, Tobias
(86) International application number: PCT/EP2010/057333
(87) International publication number: WO 2010/139602

(56) References cited:
- EP-A1- 1 662 349
- EP-A2- 1 367 314
- WO-A1-00/74472
- WO-A1-2008/030086
- DE-A1- 10 120 773
- RU-A- 2003 110 504
- SU-A1- 1 701 160
- SU-A1- 1 777 728
- SU-A2- 1 817 256
- US-B2- 7 490 576

## Description

### THE BACKGROUND OF THE INVENTION AND PRIOR ART

The present invention relates generally to reducing dangers in automatic milking arrangements. More particularly the invention relates to a milking installation according to the preamble of claim 1 and a method according to the preamble of claim 6. The invention also concerns a computer program according to claim 10 and a computer readable medium according to claim 11.

For reasons of efficiency, automatic milking solutions are becoming increasingly sophisticated. The overall degree of automation also increases. Rotary milking parlors represent one type of automated milking that has been known for decades. Here, animals to be milked enter a rotating platform. Milk is then automatically extracted from a given animal while the platform completes one turn. The milking equipment is however attached manually to the animals' teats.

Moreover, automatic milking stations (AMS) have been introduced, which enable animals to autonomously decide when they are to be milked. Automatic milking stations are advantageous because they render it possible to fully automatically service a relatively large number of milking animals via comparatively few milking machines. Automatic milking stations are also desirable from an animal health point-of-view, since thereby it is uncomplicated to extract milk more frequently than by applying the existing alternative solutions, and in general, high-frequency milking vouches for a good udder health.

To further enhance the efficiency, it is desirable to employ one or more robot arms for attaching milking equipment to the animals on a rotary milking parlor. This would maximize the utilization of the milking machine while minimizing the required manual intervention. However, a fully automatic rotary-parlor installation is associated with particular safety and security issues. Since, normally, no human operator will be present when operating the installation, the automatic mechanisms thereof must be stoppable under certain conditions, e.g. in case of an accident, if the apparatus malfunctions or if a person, an animal or an object comes within reach of a moving part. On the other hand, a complete stop may not always be necessary, and excessive stopping of the installation reduces both the efficiency and the animal comfort. Naturally, similar problems exist in connection with other movable elements in milking installations, for instance at a milking robot as such and at so-called crowd gates for driving animals in desired directions in a milking plant.

Traditionally, it has been complicated to establish relevant spatial properties of a dairy animal's teats such that teat cups can be attached thereto automatically. Either bulky or expensive stereo cameras were used, or setups with camera and scanning lasers had to be used. Lately, however, the introduction of so-called time-of-flight (TOF) cameras has simplified this task dramatically.

U. S. patent No. 7,490,576 describes a teat location system for an automated milking system, where a TOF camera is used for determining the respective locations and attitudes of an animal's teats in three dimensions.

The published international patent application WO 2008/030086 discloses an implement for automatically milking a dairy animal. Also here TOF technology is used to calculate spatial distances to points on the animal that are relevant for attaching teat cups to the animal's teats. Furthermore, the document suggests that prior to initiating cleaning of a milking parlor images from a 3D camera be used as a basis for determining whether the parlor is completely free of animals, human beings, or objects that hinder cleaning of the parlor.

However, the above-mentioned safety problems concerning automatic milking installations remain unsolved.

### SUMMARY OF THE INVENTION

The object of the present invention is therefore to alleviate these problems, and thus offer a safe milking solution which is also highly efficient.

According to one aspect of the invention, this object is achieved by the initially described milking installation, wherein the control unit is configured to discriminate between at least two different types of separate entities in the image data. In response to detecting a first type of separate entity in the operating zone, the control unit is configured to cause execution of a first action. In response to detecting a second type of separate entity in the operating zone, the control unit is further configured to cause execution of a second action.

This installation is advantageous because it enables adaptation of the milking installation's behavior depending which movable part's safety area that has been intruded and/or which entity that has entered such an area. Consequently, a high degree of efficiency can be combined with a high safety level.

According to the invention it is assumed that a milking animal represents the first type of separate entity. Here, the first action involves controlling the at least one movable element to continue an initiated procedure. For example, if a cow is found to be located in a box of a rotary parlor there is no reason to abort the teat cup attachment process. On the contrary, it is appropriate that this process is completed.

According to a preferred embodiment of this aspect of the
invention, it is assumed that a human being represents the second type of separate entity. Here, the second action involves generating a warning indication. Thus, if for example the operating zone again includes a box of a rotary parlor, it is adequate to alert the person located here and encourage him/her to leave this area as soon as possible.

According to a further preferred embodiment of this aspect of the invention, the control unit is configured to discontinue the initiated procedure if the second type of separate entity is detected in the operating zone upon expiry of a predetermined interval after generating the warning indication. Continuing to refer to the above example, for safety reasons, no personnel should be within the reach of a milking robot in operation (e.g. inside a box of a rotary parlor). Therefore, it is adequate to stop appropriate movable elements of the installation.

According to yet another preferred embodiment of this aspect of the invention, the control unit is configured to discriminate a third type of separate entity in the image data. The third type of separate entity represents an expendable animal or object, which is deemed not to interfere with the operation of the milking installation. Therefore, the control unit is configured to control the at least one movable element to continue an initiated procedure in response to detecting the third type of separate entity in the operating zone. Hence, if for example a rodent or a small piece of debris enters a milking robot's operating zone this will not influence the continued operation of the robot.

According to still another preferred embodiment of this aspect of the invention, the at least one movable element is represented by a milking robot, a rotary parlor and/or a crowd gate configured to drive milking animals in a desired direction relative to a milking equipment. Consequently, the invention is applicable to many kinds of potential risk zones in a milking installation.

According to another aspect of the invention, the object is achieved by the initially described method, wherein it is discriminated between at least two different types of separate entities in the image data. In response to detecting a first type of separate entity in the operating zone, a first action is caused to be executed, while a second action is caused to be executed in response to detecting a second type of separate entity in the operating zone. The advantages of this method, as well as the preferred embodiments thereof, are apparent from the discussion hereinabove with reference to the proposed milking installation.

According to a further aspect of the invention, the object is achieved by a computer program, which is loadable into the internal memory of a computer, and includes software for controlling the above proposed method when the program is run on a computer.

According to another aspect of the invention, the object is achieved by a computer readable medium, having a program recorded thereon, where the program is to control a computer to perform the above-proposed method.

Further advantages, advantageous features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figures 1 a-b: schematically show a milking installation according to one embodiment of the invention;
- Figure 2: illustrates, by means of a flow diagram, the general method according to the invention.

### DESCRIPTION OF PREFERRED EMBODIMENTS OF THE INVENTION

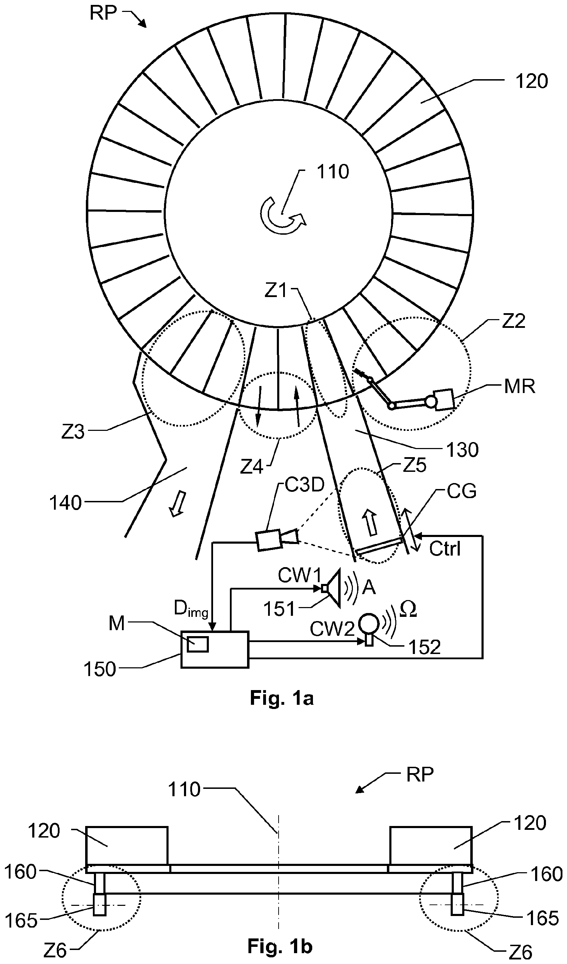

We refer initially to Figures 1 a and 1 b, which schematically show a milking installation according to one embodiment of the invention from a top view and a side view respectively. The milking installation includes at least one movable element, at least one camera C3D and a control unit 150.

Said movable elements may be represented by many different parts, members and components normally being included in an arrangement for milking dairy animals (i.e. cows, buffaloes, goats or sheep), and which are engaged in connection with milk extraction from the animals. Thus, a rotary parlor RP, a milking robot MR and a crowd gate CG may constitute the movable element. Furthermore, one or more parts of for example the rotary parlor RP may be regarded as the movable elements in question. Here, we refer specifically to an entry area (where animals walk into a respective box on the rotary parlor RP), an exit area (where the animals leave the rotary parlor RP after completed milking and having completed essentially one revolution around a rotation axis 110), an area where operators may pass into and out from a central portion of the rotary parlor RP and areas below the rotary parlor RP, where rollers 165 are located which support a track 160 of the platform.

For clarity reasons, Figure 1 a only shows one camera C3D. The camera C3D is configured to register three-dimensional image data D_{img} in real time. Thus; the camera C3D may contain a TOF camera or any other type of camera (e.g. a stereo camera, or an active wavefront sampling camera) capable of producing 3D images in real time. The image data D_{img} represents an operating zone Z5 of a schematically illustrated crowd gate CG configured to drive milking animals in a desired direction relative to milking equipment. Here, the crowd gate CG is specifically adapted to accomplish a desired stream of animals onto the rotary parlor RP.

According to the invention, however, one or more cameras may be configured to register three-dimensional image data D_{img} in real time of other relevant movable elements of the milking installation. Consequently, respective operating zones Z1, Z2, Z3, Z4 and Z6 may likewise be defined at the entry area, around the milking robot, at the exit area, at the area for allowing operators to pass into and out from the central portion of the rotary parlor RP and said areas below the rotary parlor RP.

The control unit 150 controls the operation of the milking installation, and thus inter alia controls the above-mentioned movable elements RP, MR, CG, 160 and 165. The control unit 150 is also configured to receive the image data D_{img}. According to the invention, the control unit 150 is specifically configured to discriminate between at least two different types of separate entities in the image data D_{img}. For example this may be effected based on software capable of extracting certain image properties in the image data D_{img} and relating these properties to various stored references. Since the image data D_{img} contains three-dimensional information it is a comparatively straightforward task to compare the proportions and sizes of various objects with reference data, and thus automatically determine which category an imaged object belongs to. In response to detecting a first type of separate entity in one of the operating zones Z1, Z2, Z3, Z4, Z5 and/or Z6, the control unit 150 is configured to cause execution of a first action; and in response to detecting a second type of separate entity in the operating zone in one of the operating zones Z1, Z2, Z3, Z4, Z5 and/or Z6, the control unit 150 is configured to cause execution of a second action.

A milking animal may represent the first type of separate entity. In such a case, the first type of separate entity is a creature that under normal conditions is expected to be located in the operating zones Z1, Z2, Z3 and Z5. However, the first type of separate entity should under no circumstances be located in either of the operating zones Z4 or Z6. According to one preferred embodiment of the invention, the control unit 150 is configured to cause execution of a first action involving continuing an initiated procedure for the movable element (e.g. rotating the rotary parlor or attaching teat cups) if the first type of separate entity is found to be present in the operating zones Z1, Z2, Z3 and/or Z5. Specifically, if a milking animal is located in the operating zone Z5 proximate to the crowd gate CG this will not influence the issuance of a control signal Ctrl causing the crowd gate CG to open or close.

According to one preferred embodiment of the invention, the second type of separate entity may be represented by a human being. In the embodiment illustrated in Figures 1 a and 1 b, during operation of the installation, only under exceptional circumstances (e.g. when performing service) humans should be expected in the operating zone Z4. In all other operating zones (i.e. Z1, Z2, Z3 Z5 and Z6), the presence of a human being constitutes an anomaly. Therefore, if the control unit 150 detects a second type of separate entity in the form of a human being in one or more of the operating zones Z1, Z2, Z3 Z5 and Z6 (and normally also Z4), the control unit 150 is configured to cause execution of a second action which involves generating a warning indication intended to stimulate the person in question to leave the operating zone. For instance, such a warning indication can be generated as an acoustic signal A (e.g. an alarm sound and/or a playback vocal message) via a loudspeaker member 151 or equivalent; or as an optical signal Ω via a light source 152. Consequently, the control unit 150 may be configured to generate a first control signal CW1 to the loudspeaker member 151 and/or a second control signal CW2 to the light source 152 in response to detecting a human being in one or more of the operating zones Z1, Z2, Z3, (Z4), Z5 and Z6.

If a human being who has invaded an operating zone, e.g. Z5, entirely leaves this area sufficiently quick, there is no need to abort the operation of any movable member, say the crowd gate CG. If, however, this does *not* happen there is an apparent risk for severe injuries, and even casualties. Therefore, according to one preferred embodiment of the invention, the control unit 150 is configured to discontinue the initiated procedure if the second type of separate entity is detected in one or more of the operating zones Z1, Z2, Z3, Z4, Z5 and/or Z6 upon expiry of a predetermined interval for the zone in question after generating the warning indication, e.g. the above-mentioned acoustic signal A or optical signal Ω.

Technically, under certain conditions (e.g. when servicing the installation), a human being may be the first type of separate entity in respect the operating zone Z4 and a milking animal may be the second type of separate entity.

The areas defined by the operating zones Z6 (i.e. the regions around the rollers 165, which support the track 160 of the rotary parlor's RP platform and a drive unit (not shown)) are potentially extremely dangerous. Any living being (human or animal) located here during operation of the rotary parlor RP risk immediate death by being squeezed between a roller 165 and the track 160. Therefore, if a human being or milking animal is detected here, the control unit 150 is preferably configured to cause the rotary parlor RP to stop instantaneously. One reason for why a person may want to enter the space under the rotary parlor RP is to lubricate the bearings of the rollers 165. Naturally, this should only be done when the rotary parlor RP is stationary.

There are cases when stopping the milking installation, or a part thereof, can be avoided. Namely, some entities are in fact expendable and also small enough not to influence the operation of the milking installation as such *even if* an animal or object of this type would be present in one or more of the operating zones Z1, Z2, Z3, Z4, Z5 and/or Z6, and as a result be hit/squeezed by a movable member. Rodents and small pieces of debris may constitute examples of such entities. Therefore, according to one preferred embodiment of the invention, the control unit 150 is configured to discriminate a third type of separate entity in the image data D_{img}. The third type of separate entity represents an expendable animal or object, which is deemed not to interfere with the operation of the milking installation. In response to detecting the third type of separate entity in an operating zone Z1, Z2, Z3, Z4, Z5 and/or Z6, the control unit 150 is configured to control the at least one movable element to continue an initiated procedure, e.g. to rotate the rotary parlor RP around its axis 110.

Preferably, the control unit 150 includes, or is associated with, a computer readable medium M, e.g. in the form of a memory module, such that the control unit 150 has access to the contents of this medium M. Furthermore, a program is recorded in the computer readable medium M, and the program is adapted to make a data processor in the control unit 150 control the process described above when the program is run on the processor.

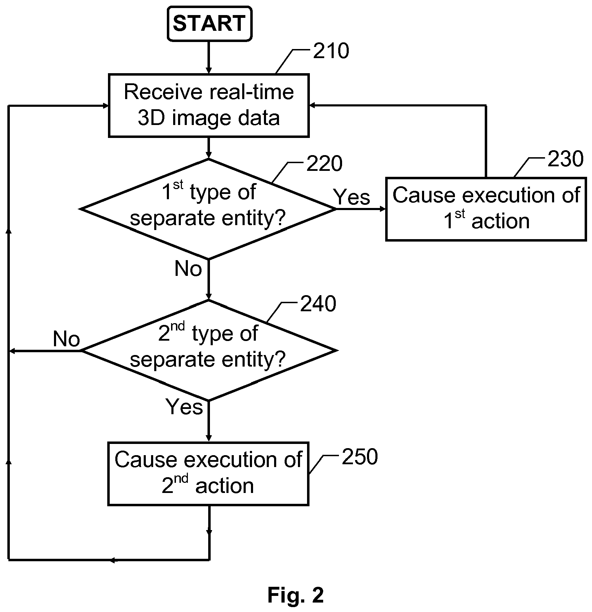

In order to sum up, we will now describe the general method according to the invention with reference to the flow diagram in Figure 2.

A first step 210 receives three-dimensional real-time image data, i.e. data that may have been recorded by means of a 3D camera. Thereafter, a step 220 checks whether a first type of separate entity is detected in a pre-defined operating zone covered by the image data, and if so, a step 230 follows. Otherwise, the procedure continues to a step 240.

Step 230 causes a first action to be executed. As mentioned above, a milking animal may represent the first type of separate entity, and the operating zone may correspond to the operative range of a milking robot. In such a case, the first action typically involves continuing the operation procedure of the milking robot. After step 230, the procedure loops back to step 210.

Step 240 checks whether a second type of separate entity is detected in the operating zone, and if so, a step 250 follows. Otherwise, the procedure loops back to a step 210. Step 250 causes a second action to be executed. Here, the second type of separate entity may be represented by a human being, and if, again, the operating zone corresponds to the operative range of a milking robot, the second action preferably involves generating a warning message to alert the person in question. After step 250, the procedure loops back to step 210.

All of the process steps, as well as any sub-sequence of steps, described with reference to Figure 2 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The program may either be a part of an operating system, or be a separate application. The carrier may be any entity or device capable of carrying the program. For example, the carrier may comprise a storage medium, such as a Flash memory, a ROM (Read Only Memory), for example a DVD (Digital Video/Versatile Disk), a CD (Compact Disc) or a semiconductor ROM, an EP-ROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is advantageous because the proposed discrimination between different types of separate entities and the adaptive behavior based on this discrimination renders it possible to operate a milking installation in a safe manner also under conditions when solutions based on previously known technology would have required a complete stop of the installation. For instance, if a rotary parlor is equipped with two or more milking robots, one or more of these robots may be serviced while the remaining robots continue to milk animals. Namely, the system can be adapted to the fact that service personnel is allowed to be present in certain areas, e.g. in proximity to the robot(s) being serviced, and regard other areas as active parts of the installation where no human beings are allowed during operation.

The term "comprises/comprising" when used in this specification is taken to specify the presence of stated features, integers, steps or components. However, the term does not preclude the presence or addition of one or more additional features, integers, steps or components or groups thereof.

The reference to any prior art in this specification is not, and should not be taken as, an acknowledgement or any suggestion that the referenced prior art forms part of the common general knowledge in Australia, or any other country.

The invention is not restricted to the described embodiments in the figures, but may be varied freely within the scope of the claims.

## Claims

1. A milking installation comprising:
at least one movable element (RP, MR, CG, 160, 165), configured to be engaged in connection with milk extraction from at least one milking animal,
at least one camera (C3D) configured to register three-dimensional image data (D_{img}) in real time, the image data (D_{img}) representing an operating zone (Z1, Z2, Z3, Z4, Z5, Z6) of the at least one movable element (RP, MR, CG, 160, 165), and
a control unit (150) configured to receive the image data (D_{img}) and control the at least one movable element (RP, MR, CG, 160, 165), **characterized in that** the control unit (150) is configured to discriminate between at least two different types of separate entities in the image data (D_{img}) and cause execution of:
a first action in response to detecting a first type of separate entity in the operating zone (Z1, Z2, Z3, Z4, Z5, Z6), and
a second action in response to detecting a second type of separate entity in the operating zone (Z1, Z2, Z3, Z4, Z5, Z6),
wherein a milking animal represents the first type of separate entity and the first action involves controlling (Ctrl) the at least one movable element (RP, MR, CG, 160, 165) to continue an initiated procedure.

2. The milking installation according to claim 1, wherein a human being represents the second type of separate entity and the second action involves generating a warning indication (A, Ω).

3. The milking installation according to claim 2, wherein the control unit (150) is configured to discontinue the initiated procedure if the second type of separate entity is detected in the operating zone (Z1, Z2, Z3, Z4, Z5, Z6) upon expiry of a predetermined interval after generating the warning indication (A, Ω).

4. The milking installation according to any one of the preceding claims, wherein the control unit (150) is configured to:
discriminate a third type of separate entity in the image data (D_{img}), and
control the at least one movable element (RP, MR, CG, 160,165) to continue an initiated procedure in response to detecting the third type of separate entity in the operating zone (Z1, Z2, Z3, Z4, Z5, Z6).

5. The milking installation according to any one of the preceding claims, wherein the at least one movable element (RP, MR, CG, 160,165) is represented by at least one of a milking robot (MR), a rotary parlor (RP) and a crowd gate (CG) configured to drive milking animals in a desired direction relative to a milking equipment.

6. A method of controlling at least one movable element in connection with milk extraction from at least one milking animal, the method comprising:
registering three-dimensional image data (D_{img}) in real time via at least one camera (C3D), the image data (D_{img}) representing an operating zone (Z1, Z2, Z3, Z4, Z5, Z6) of the at least one movable element,
**characterized by**
discriminating between at least two different types of separate entities in the image data (D_{img}),
causing execution of a first action in response to detecting a first type of separate entity in the operating zone (Z1, Z2, Z3, Z4, Z5, Z6), and
causing execution of a second action in response to detecting a second type of separate entity in the operating zone (Z1, Z2, Z3, Z4, Z5, Z6),
wherein a milking animal represents the first type of separate entity and the first action involves controlling the at least one movable element (RP, MR, CG, 160,165) to continue an initiated procedure.

7. The method according to claim 6, wherein a human being represents the second type of separate entity and the second action involves generating a warning indication.

8. The method according to claim 7, comprising discontinuing the initiated procedure if the second type of separate entity is detected in the operating zone upon expiry of a predetermined interval after generating the warning indication (A, Ω).

9. The method according to any one of claims 6 to 8, comprising:
discriminating a third type of separate entity in the image data (D_{img}), and
controlling the at least one movable element (RP, MR, CG, 160,165) to continue an initiated procedure in response to detecting the third type of separate entity in the operating zone (Z1, Z2, Z3, Z4, Z5, Z6).

10. A computer program loadable into the internal memory (M) of a computer, comprising software for controlling the steps of any one of claims 6 to 9 when the program is run on the computer.

11. A computer readable medium (M) having a program recorded thereon, where the program is to make a computer control the steps of any one of claims 6 to 9 when the program is loaded into the computer.

## Patentansprüche

1. Melkinstallation umfassend:
mindestens ein bewegbares Element (RP, MR, CG, 160,165), das zum Kuppeln in Verbindung mit einer Gewinnung von Milch von mindestens einem Melktier konfiguriert ist,
mindestens eine Kamera (C3D), die zum Registrieren dreidimensionaler Bilddaten (D _{img}) in Echtzeit konfiguriert ist, wobei die Bilddaten (D _{img}) eine Einsatzzone (Z1, Z2, Z3, Z4, Z5, Z6) des mindestens einen bewegbaren Elements (RP, MR, CG, 160,165) repräsentieren, und
eine Kontrolleinheit (150), die zum Empfangen der Bilddaten (D_{img}) und zum Steuern des mindestens einen bewegbaren Elements (RP, MR, CG, 160,165) konfiguriert ist, **dadurch gekennzeichnet, dass** die Kontrolleinheit (150) zum Unterscheiden zwischen mindestens zwei unterschiedlichen Typen separater Einheiten der Bilddaten (D _{img}) konfiguriert ist und eine Ausführung verursacht:
einer ersten Aktion in Erwiderung auf das Erkennen eines ersten Typs einer separaten Einheit in der Einsatzzone (Z1, Z2, Z3, Z4, Z5, Z6) und
eine zweite Aktion in Erwiderung auf das Erkennen eines zweiten Typs einer separaten Einheit in der Einsatzzone (Z1, Z2, Z3, Z4, Z5, Z6),
wobei ein Milchvieh den ersten Typ einer separaten Einheit repräsentiert und die erste Aktion ein Steuern (Ctrl) des mindestens einen bewegbaren Elements (RP, MR, CG, 160,165) beinhaltet, um ein eingeleitetes Verfahren fortzusetzen.

2. Melkinstallation nach Anspruch 1, wobei ein Mensch den zweiten Typ einer separaten Einheit repräsentiert und die zweite Aktion ein Hervorbringen einer Warnanzeige (A, Ω) beinhaltet.

3. Melkinstallation nach Anspruch 2, wobei die Kontrolleinheit (150) zum Unterbrechen des eingeleiteten Verfahrens konfiguriert ist, wenn bei Ablauf eines vorbestimmten Intervalls nach Hervorbringen der Warnanzeige (A, Ω) der zweite Typ der separaten Einheit in der Einsatzzone (Z1, Z2, Z3, Z4, Z5, Z6) erkannt wird.

4. Melkinstallation nach einem der vorhergehenden Ansprüche, wobei die Kontrolleinheit (150) konfiguriert ist:
zum Unterscheiden eines dritten Typs einer separaten Einheit in den Bilddaten (D _{img}) und
zum Steuern des mindestens einen bewegbaren Elements (RP, MR, CG, 160,165) zum Fortsetzen eines eingeleiteten Verfahrens in Erwiderung auf das Erkennen des dritten Typs einer separaten Einheit in der Einsatzzone (Z1, Z2, Z3, Z4, Z5, Z6).

5. Melkinstallation nach einem der vorhergehenden Ansprüche, wobei das mindestens eine bewegbare Element (RP, MR, CG, 160,165) von mindestens einem Melkroboter (MR), einem Karussell (RP) und einem Leitgatter (CG) repräsentiert wird, die zum Antreiben der Melktiere in eine gewünschte Richtung relativ zu einer Melkeinrichtung konfiguriert sind.

6. Verfahren zum Steuern mindestens eines bewegbaren Elements in Verbindung mit der Gewinnung von Milch aus mindestens einem Melktier, wobei das Verfahren umfasst:
Registrieren dreidimensionaler Bilddaten (D _{img}), in Echtzeit mithilfe mindestens einer Kamera (C3D), wobei die Bilddaten (D_{img}) eine Einsatzzone (Z1, Z2, Z3, Z4, Z5, Z6) des mindestens einen bewegbaren Elements repräsentieren,
**gekennzeichnet durch**
ein Unterscheiden zwischen mindestens zwei unterschiedlichen Typen separater Einheiten in den Bilddaten (D _{img}),
ein Ausführen einer ersten Aktion in Erwiderung auf ein Erkennen eines ersten Typs einer separaten Einheit in der Einsatzzone (Z1, Z2, Z3, Z4, Z5, Z6) und
ein Ausführen einer zweiten Aktion in Erwiderung auf ein Erkennen eines zweiten Typs einer separaten Einheit in der Einsatzzone (Z1, Z2, Z3, Z4, Z5, Z6),
wobei ein Milchvieh den ersten Typ einer separaten Einheit repräsentiert und die erste Aktion ein Steuern des mindestens einen bewegbaren Elements (RP, MR, CG, 160,165) beinhaltet, um ein eingeleitetes Verfahren fortzusetzen.

7. Verfahren nach Anspruch 6, wobei ein Mensch den zweiten Typ einer separaten Einheit repräsentiert und die zweite Aktion ein Hervorbringen einer Warnanzeige beinhaltet.

8. Verfahren nach Anspruch 7, umfassend ein Unterbrechen des eingeleiteten Verfahrens, wenn bei Ablauf eines vorbestimmten Intervalls nach Hervorbringen der Warnanzeige (A, Ω) der zweite Typ einer separaten Einheit in der Einsatzzone erkannt wird.

9. Verfahren nach einem der Ansprüche 6 bis 8, umfassend:
Unterscheiden eines dritten Typs einer separaten Einheit in den Bilddaten (D _{img}), und
Steuern des mindestens einen bewegbaren Elements (RP, MR, CG, 160,165) zur Fortsetzung eines eingeleiteten Verfahrens in Erwiderung auf ein Erkennen des dritten Typs einer separaten Einheit in der Einsatzzone (Z1, Z2, Z3, Z4, Z5, Z6).

10. Rechnerprogramm, das in den internen Speicher (M) eines Rechners ladbar ist, umfassend eine Software zum Steuern der Schritte eines der Ansprüche 6 bis 9, wenn das Programm auf dem Rechner läuft.

11. Rechnerlesbares Medium (M) mit einem darauf gespeicherten Programm, wobei das Programm dazu dient, dass ein Rechner die Schritte eines der Ansprüche 6 bis 9 steuert, wenn das Programm auf dem Rechner geladen ist.

## Revendications

1. Installation de traite comprenant :
au moins un élément mobile (RP, MR, CG, 160, 165) configuré pour être mis en oeuvre dans le cadre de la traite d'au moins un animal laitier,
au moins une caméra (C3D) configurée pour enregistrer des données d'images tridimensionnelles (D_{img}) en temps réel, lesdites données d'images (D_{img}) représentant une zone d'action (Z1, Z2, Z3, Z4, Z5, Z6) de l'au moins un élément mobile (RP, MR, CG, 160, 165), et
une unité de commande (150) configurée pour recevoir les données d'images (D_{img}) et commander l'au moins un élément mobile (RP, MR, CG, 160, 165), **caractérisée en ce que** l'unité de commande (150) est configurée pour distinguer au moins deux types différents d'entités distinctes dans les données d'images (D_{img}) et provoquer l'exécution :
d'une première réaction à la détection d'un premier type d'entité distincte dans la zone d'action (Z1, Z2, Z3, Z4, Z5, Z6), et
d'une deuxième réaction à la détection d'un deuxième type d'entité distincte dans la zone d'action (Z1, Z2, Z3, Z4, Z5, Z6), le premier type d'entité distincte étant un animal laitier et la première réaction étant la commande (Ctrl) de l'au moins un élément mobile (RP, MR, CG, 160, 165) afin de continuer une procédure entamée.

2. Installation de traite selon la revendication 1, dans laquelle le deuxième type d'entité distincte est une personne et la deuxième réaction est l'émission d'un avertissement (A, Ω).

3. Installation de traite selon la revendication 2, dans laquelle l'unité de commande (150) est configurée pour stopper la procédure entamée si le deuxième type d'entité distincte est détecté dans la zone d'action (Z1, Z2, Z3, Z4, Z5, Z6) au terme d'une durée prédéterminée après l'émission de l'avertissement (A, Ω).

4. Installation de traite selon l'une quelconque des revendications précédentes, dans laquelle l'unité de commande (150) est configurée pour :
distinguer un troisième type d'entité distincte dans les données d'images (D_{img}) et
commander l'au moins un élément mobile (RP, MR, CG, 160, 165) afin de continuer une procédure entamée, en réaction à la détection du troisième type d'entité distincte dans la zone d'action (Z1, Z2, Z3, Z4, Z5, Z6).

5. Installation de traite selon l'une quelconque des revendications précédentes, dans laquelle l'au moins un élément mobile (RP, MR, CG, 160, 165) consiste en un robot de traite (MR), une installation tournante (RP) et/ou un portillon (CG), configurés pour diriger les animaux laitiers dans la direction souhaitée par rapport à un équipement de traite.

6. Procédé de commande d'au moins un élément mobile dans le cadre de la traite d'au moins un animal laitier, le procédé comprenant :
l'enregistrement en temps réel de données d'images tridimensionnelles (D_{img}) au moyen d'au moins une caméra (C3D), lesdites données d'images (D_{img}) représentant une zone d'action (Z1, Z2, Z3, Z4, Z5, Z6) de l'au moins un élément mobile,
**caractérisé par**
la distinction d'au moins deux types d'entités distinctes dans les données d'images (D_{img}),
une première réaction à la détection d'un premier type d'entité distincte dans la zone d'action (Z1, Z2, Z3, Z4, Z5, Z6) et
une deuxième réaction à la détection d'un deuxième type d'entité distincte dans la zone d'action (Z1, Z2, Z3, Z4, Z5, Z6),
le premier type d'entité distincte étant un animal laitier et la première réaction étant la commande de l'au moins un élément mobile (RP, MR, CG, 160, 165) afin de continuer une procédure entamée.

7. Procédé selon la revendication 6, dans lequel le deuxième type d'entité distincte est une personne et la deuxième réaction est l'émission d'un avertissement.

8. Procédé selon la revendication 7, comprenant l'arrêt de la procédure entamée si le deuxième type d'entité distincte est détecté dans la zone d'action au terme d'une durée prédéterminée après l'émission de l'avertissement (A, Ω).

9. Procédé selon l'une quelconque des revendications 6 à 8, comprenant :
la distinction d'un troisième type d'entité distincte dans les données d'images (D_{img}) et
la commande de l'au moins un élément mobile (RP, MR, CG, 160, 165) afin de continuer une procédure entamée, en réaction à la détection du troisième type d'entité distincte dans la zone d'action (Z1, Z2, Z3, Z4, Z5, Z6).

10. Programme informatique pouvant être chargé dans la mémoire interne (M) d'un ordinateur, comprenant un logiciel qui, lorsque le programme est exécuté par l'ordinateur, commande les étapes selon l'une quelconque des revendications 6 à 9.

11. Support (M) lisible par un ordinateur, sur lequel est enregistré un programme qui, lorsqu'il est chargé dans l'ordinateur, lui permet de commander les étapes selon l'une quelconque des revendications 6 à 9.
